(19) **Europäisches Patentamt**
**European Patent Office**
**Office européen des brevets**

(11) **EP 1 724 959 B1**

(12) **EUROPEAN PATENT SPECIFICATION**

(45) Date of publication and mention
of the grant of the patent:
**10.04.2013 Bulletin 2013/15**

(51) Int Cl.:
*H04L 1/18* (2006.01)        *H04B 1/707* (2011.01)
*H04L 5/02* (2006.01)

(21) Application number: **05011043.6**

(22) Date of filing: **21.05.2005**

(54) **Multiple access communication system with ARQ and interference cancellation**

Mehrfachzugriffsübertragungssystem mit ARQ und Interferenzauslöschung

Système d'accès multiple avec ARQ et annulation d'interférence

(84) Designated Contracting States:
**DE FR GB**

(43) Date of publication of application:
**22.11.2006 Bulletin 2006/47**

(73) Proprietor: **Deutsches Zentrum für Luft- und
Raumfahrt e.V.
51147 Köln (DE)**

(72) Inventors:
• **Arkhipov, Alexander
82205 Gilching (DE)**
• **Schnell, Michael, Dr.
82205 Gilching (DE)**
• **Raulefs, Ronald
80538 München (DE)**
• **Dammann, Armin
82266 Inning (DE)**

(74) Representative: **von Kreisler Selting Werner
Deichmannhaus am Dom
Bahnhofsvorplatz 1
50667 Köln (DE)**

(56) References cited:
• ZHENG H; LOZANO L; HALEEM M: "Multiple ARQ processes for MIMO systems" EURASIP JOURNAL ON APPLIED SIGNAL PROCESSING, [Online] 1 May 2004 (2004-05-01), pages 772-782, XP002350085 ISSN: 1110-8657 Retrieved from the Internet: URL:http://www.hindawi.com/journals/asp/vo lume-2004/S1110865704311042.html> [retrieved on 2005-10-18]

• HAITAO ZHENG ET AL: "Multiple ARQ processes for MIMO systems" PERSONAL, INDOOR AND MOBILE RADIO COMMUNICATIONS, 2002. THE 13TH IEEE INTERNATIONAL SYMPOSIUM ON SEPT. 15-18, 2002, PISCATAWAY, NJ, USA,IEEE, vol. 3, 15 September 2002 (2002-09-15), pages 1023-1026, XP010611417 ISBN: 0-7803-7589-0

• KAISER S ED - INSTITUTE OF ELECTRICAL AND ELECTRONICS ENGINEERS: "OFDM CODE DIVISION MULTIPLEXING WITH UNEQUAL ERROR PROTECTION AND FLEXIBLE DATA RATE ADAPTATION" GLOBECOM'01. 2001 IEEE GLOBAL TELECOMMUNICATIONS CONFERENCE. SAN ANTONIO, TX, NOV. 25 - 29, 2001, IEEE GLOBAL TELECOMMUNICATIONS CONFERENCE, NEW YORK, NY : IEEE, US, vol. VOL. 2 OF 6, 25 November 2001 (2001-11-25), pages 861-865, XP001099228 ISBN: 0-7803-7206-9

• KAISER S: "OFDM CODE-DIVISION MULTIPLEXING IN FADING CHANNELS" IEEE TRANSACTIONS ON COMMUNICATIONS, IEEE INC. NEW YORK, US, vol. 50, no. 8, August 2002 (2002-08), pages 1266-1273, XP001125116 ISSN: 0090-6778

• KAISER S: "On the performance of different detection techniques for OFDM-CDMA in fading channels" GLOBAL TELECOMMUNICATIONS CONFERENCE, 1995. CONFERENCE RECORD. COMMUNICATION THEORY MINI-CONFERENCE, GLOBECOM '95., IEEE SINGAPORE 13-17 NOV. 1995, NEW YORK, NY, USA,IEEE, US, 13 November 1995 (1995-11-13), pages 2059-2063, XP010164618 ISBN: 0-7803-2509-5

**(Cont. next page)**

- PAULRAJ A ET AL: "Introduction to Space-Time Wireless Communications" INTRODUCTION TO SPACE-TIME WIRELESS COMMUNICATIONS, May 2003 (2003-05), pages 178-184, XP002333354
- PAULRAJ A ET AL: "INTRODUCTION TO SPACE-TIME WIRELESS COMMUNICATIONS, pages 159-162" May 2003 (2003-05), CAMBRIDGE UNIVERSITY PRESS , XP002350088 * page 161, paragraph 1 *
- MIELCZAREK B; KRZYMIEN W: "Soft parallel decoding of per-antenna-coded MIMO systems", COMMUNICATIONS, 2005. ICC 2005. 2005 IEEE INTERNATIONAL CONFERENCE ON SEOUL, KOREA 16-20 MAY 2005, 16 May 2005 (2005-05-16), - 20 May 2005 (2005-05-20), pages 2256-2260, XP010826270, Korea, Seoul

**Description**

The present invention relates to a multi-user OFDMA-CDM multiple access communication method for transmitting signals prepared as digital OFDMA-CDM data symbols in the form of packets between a transmitter and a receiver, using L different orthogonal subcarriers for each of the different users and an additional code division multiplexing component by which the packets of a certain user are spread with orthogonal spreading codes and obtained chips are transmitted on separate subcarriers, and using soft interference cancellation.

In orthogonal frequency-division multiplexing (OFDM) based multiple-access systems, like OFDMA, the whole bandwidth is split into several orthogonal subcarriers, which are used for wireless or wired data transmission. The idea behind OFDM is to map a serial high rate source stream onto multiple parallel low rate substreams and to modulate each substream on separated subcarrier. Different users can transmit data within an OFDMA system by using different subcarriers. OFDMA allows avoiding undesirable interference with other users through frequency division multiple access and avoids inter-symbol interference (ISI) through a guard interval. OFDMA can be considered with an additional code division multiplexing (CDM) component. Such a system is described in S. Kaiser: "OFDM Code Division Multiplexing with Unequal Error Protection and Flexible Data Rate Adaptation", IEEE Globecom' 01, 2001 IEEE Global Telecommunications Conference, San Antonio, TX, Nov. 25-29, 2001, IEEE Telecommunications Conference, New York, NY: IEEE, US, vol.2 of 6, 25. November 2001 (2001-11-25), pp. 861-865, and particularly in S. Kaiser: "OFDM-code-division multiplexing in fading channels", IEEE Trans. on Commun., vol. 50, no. 8, pp. 1266-1273, Aug. 2002. In OFDMA-CDM, the data symbols of a certain user are spread with orthogonal spreading codes and obtained chips are transmitted after the OFDM modulation on separated subcarriers. Applying the CDM component, the performance of OFDMA-CDM scheme can be improved. However, OFDMA-CDM suffers from self-interference (SI) in fading channels. In order to cope with SI, a multi-symbol/user detector (MD) can be used to improve performance and bandwidth efficiency of OFDMA-CDM. As a practical and effective MD, the soft parallel interference cancellation (soft PIC) detector is normally applied.

To achieve error free transmission, forward error control (FEC) techniques and hybrid automatic repeat request (H-ARQ) are normally applied. There are two types of H-ARQ: hybrid ARQ with incremental redundancy (IR), published in J. Hagenauer, "Rate compatible punctured convolutional codes (RCPC) and their application", IEEE Trans. Comm., vol. 36, pp. 389-400, Apr. 1998, and hybrid ARQ with Chase combining, published in D. Chase, "Code combining - a maximum-likelihood decoding approach for combining an arbitrary number of noisy packets", IEEE Trans. on Commun., vol. COM-33, no. 5, pp. 385-393, May 1985. Chase combining works as follows: the same data packet is transmitted upon a repeat request and the soft decision statistics from all retransmissions are coherently combined on symbol or bit level. For the symbol level combing, maximum ratio combing (MRC) is used, since MRC provides the best signal-to-noise ratio (SNR). The idea behind soft value combining (SVC) is that the combination of an arbitrary number of soft decoded packets can be considered as an additional repetition code.

In incremental redundancy (IR), the retransmitted packets are typically not identical to the original transmission packet; the retransmitted packets carry additional redundancy information, i.e., parity bits for error correction. These additional redundancy bits are combined with the previously received bits, decreasing the effective code rate after each retransmission.

A well-known method for reduction the bit error rate is the so-called channel coding. But as drawback, channel coding reduces the throughput, which is caused by a redundancy, which is added into the data stream. For modern mobile radio system such as GSM and UMTS the loss is approximately 50%.

Another known method to increase the performance of the system with interference between transmitted symbols is soft parallel interference cancellation (soft PIC). In J. Hagenauer: "Forward error correcting for CDMA systems" in Proc. IEEE Fourth Int. Symp. Spread Spectrum Tech. Applicat. (ISSSTA' 96), pp. 566-569, Sept. 1996, the principle of the soft parallel interference cancellation is described. The main drawback of parallel interference cancellation (PIC) is that the interference cancellation can not be performed ideally. Remaining self-interference (SI) is still present after soft PIC which leads to performance degradation. Moreover, soft PIC is very unreliable at low signal-to-noise-ratio (SNR) and for high modulation cardinalities.

A well-known method to correct transmission errors is already mentioned hybrid automatic repeat request (H-ARQ) techniques. The difference between Chase combining and incremental redundancy is underlined. Hybrid ARQ guarantees the error-free transmission and allows improving the performance of mobile radio systems by combining previously transmitted data packets. However, H-ARQ does not improve the performance of the soft interference cancellation and therefore reduces the spectral efficiency of the mobile radio system.

Iterative multi-user detection is described in X. Wang and H. V. Poor, "Iterative (turbo) soft interference cancellation and decoding for coded CDMA" IEEE Trans . on Commun., vol. 47, no. 7, pp. 1046-1061, July 1999. The drawback of this system is that the proposed technique does not take into account hybrid ARQ.

Haitao Zheng et al: "Multiple ARQ processes for MIMO systems", Personal, Indoor and Mobile Radio Communications, 2002, The 13th IEEE International Symposium on Sept. 15-18, 2002, Piscataway, NJ, USA, IEEE, vol.3, 15 September 2002 (2002-09-15), pp. 1023-1026, discloses a MIMO-ARQ-CDMA system with spreading and time-multiplexing for UMTS. This multiple access UMTS-communication system is designed for frequency-flat fading channel and transmits digital data symbols in packet form using automatic repeat request (ARQ) and interference cancellation to achieve error-free multi-user wireless transmission of signals.

It is an object of the present invention to further improve the reliability of multi-user OFDMA-CDM multiple access communication methods where are to transmit digital data symbols at high data rates. This invention should be applied on OFDMA-CDM multiple access scheme that causes interference between data symbols. The object is achieved by the invention as defined in claim 1.

The present invention improves the reliability of error-free transmission at high data rates by combining ARQ and soft interference cancellation, e.g. like soft parallel interference cancellation (PIC). This invention can be applied on OFDMA-CDM multiple access scheme that causes interference between data symbols. As long as interference is caused due to channel variations (e.g. fading) and a combination between an H-ARQ scheme and a soft interference cancellation detector is used, the reliability is enhanced to allow transmitting the data error-free. It is necessary to have all the information available that are needed for the ARQ and for the interference cancellation process. This is e.g. the case, when a base station transmits data combined by an OFDMA-CDM scheme for different users.

In the following, superimposed packet allocation for OFDMA-CDM is considered, where each transmitted packet is associated with one spreading code. An iterative algorithm which is a combination of soft PIC (Parallel Interference Cancellation) and H-ARQ based on SVC (Soft Value Combining) is proposed. This algorithm exploits the reliability information of erroneously received copies of the same data packet to improve the performance of interference cancellation. The interference of correctly received packets is ideally reconstructed and subtracted; thus, the overall system performance improves iteratively.

In the method according to the invention for each of the superimposed packets a H-ARQ process is implemented. The correctly received packets are determined using cycle redundancy checking. L different orthogonal subcarriers are used for each of the different users and an additional code division multiplexing component by which the packets of a certain user are spread with orthogonal spreading codes and obtained chips are transmitted on separate subcarriers.

Useful developments of the present invention are stated in claims depending directly or indirectly on claim 1.

The proposed method including an algorithm is an interesting technique for the information- and communication industry, and can be used for improving the quality and capacity of present and future OFDMA-CDM wireless or wired transmission systems with spreading. OFDMA-CDM systems are in discussion for the fourth generation of mobile radio systems.

The invention will now be described in greater detail with reference to the accompanying drawings, of which:

Fig. 1    is the schematic illustration of a OFDMA-CDM transmitter for use in the proposed method,

Fig. 2    shows the content of the buffer of received values,

Fig. 3    is a proposed interference cancellation scheme with re-encoded values combining,

Fig. 4    illustrates schematically an ideal interference reconstruction and subtraction, and

Fig. 5    shows the normalized throughput for different systems and different H-ARQ schemes versus signal-to-noise ratio (SNR), wherein QPSK-modulation is used.

First of all said superimposed packets allocation is considered. itself can be considered without loss of generality for a multi-user system. For convenience, indices which distinguish different users are omitted.

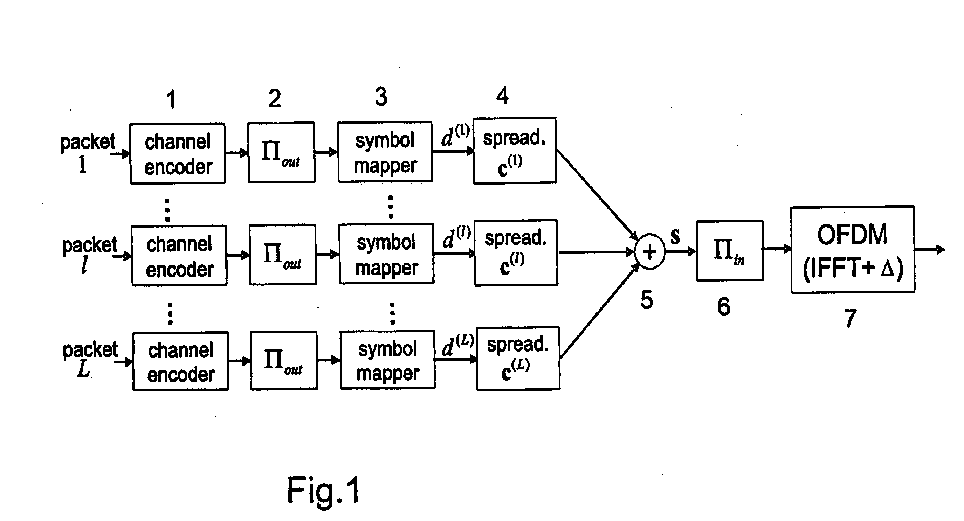

In Fig.1 an OFDMA-CDM transmitter is shown which is capable to transmit $L$ ($1 = 1,...,L$) packets of equal size simultaneously by applying spreading codes of length $L$ within the CDM component. At the end of each packet, cyclic redundancy check (CRC) bits are appended. The packet is decoded at the receiver and is considered error-free if the CRC passes. In this case, a positive acknowledgement (ACK) is generated and sent back to the transmitter. Otherwise, a negative acknowledgement (NACK) is sent back and the transmission of the erroneously decoded packet is repeated. It is assumed that acknowledgment from the receiver to the transmitter are error-free and buffer overflows occur neither at the transmitter nor at the receiver. The maximum allowed number of transmissions is limited to $N_{tr}$. If the packet can not be decoded in $N_{tr}$ transmissions, the transmitter discards the packet. In the following, for each packet $1$ ($1 = 1,...,L$), the total number of occurred transmissions is defined as $M_1 \leq N_{tr}$. At the physical layer, the $L$ packets are simultaneously transmitted within one frame, which consists of $N_{fr}$ OFDMA-CDM symbols. After channel encoding in encoders 1 and outer interleaving $\Pi_{out}$ in interleavers 2 the coded bits $b^{(l)}$, $l = 1,...,L$, are symbol mapped in symbol mappers 3, yielding complex-valued data symbols. The outer interleaving is constructed in such a way that it performs independent random interleaving between the retransmission, which allows the system to exploit time and frequency diversity between retransmission.

Data symbols from different packets are transmitted in groups of L symbols. In each group only one data symbol from each packet is transmitted. The number of groups transmitted within one OFDMA-CDM symbol is denoted as Q. Thus, Q symbols of each packet are transmitted within one OFDMA-CDM symbol, using LQ subcarriers. The intention of such a group allocation is to increase the number of subcarriers and to increase the size of the packet, while keeping the spreading code length and the maximum number of active users constant.

Assume that the vector $\mathbf{d}=(d^{(l)},d^{(l)},...,d^{(L)})^T$ represents the data symbols of the L transmitted packets. The sequence $\mathbf{s}$ represents spread data symbols of one group and is written as

$$s = C_L d \quad , \qquad\qquad (1)$$

where a Walsh-Hadamard (WH) transformation

$$C_L = \begin{pmatrix} C_{L/2} & C_{L/2} \\ C_{L/2} & -C_{L/2} \end{pmatrix}, C_1 = 1 \qquad\qquad (2)$$

is applied to perform spreading in spreading units 4. The resulting L columns $\mathbf{c}^{(l)}, l=1,...,L$, of matrix $\mathbf{C}_L$ represent the orthogonal spreading codes. This transformation allows one orthogonal WH spreading code $\mathbf{c}^{(l)}$ to be associated with each transmitted packet $l, l=1,...,L$. The resulting sequence $\mathbf{s}$ coming out from summing unit 5 is transmitted within one OFDMA-CDM symbol. After inner frequency interleaving $\Pi_{in}$ by interleaver 6, the elements of $\mathbf{s}$ are transmitted on separate subcarriers by performing an OFDM modulation in OFDM modulator 7. A guard interval $\Delta$, which is larger than the maximum delay of the transmission channel, is added. The guard interval $\Delta$ avoids inter-symbol interference (ISI) with the preceding OFDMA-CDM symbol.

As an alternative, another packet allocation system is possible, where several subsequent OFDMA-CDM symbols are employed for the transmission of data symbols of one packet. In this case, all spreading codes are assigned for the transmission of one packet. This allocation allows exploiting H-ARQ based on maximum ratio combining (MRC), since in each retransmission the same data symbols are transmitted.

Assume that CRC verifies an error-free transmission of packet $l$ ($l = 1,...,L$). In this case, the interference of successfully decoded packet can be reconstructed and subtracted. The iterative application of ideal interference cancellation can improve the performance of the soft interference cancellation. Significant gains can be achieved for high modulation cardinalities, with alphabets like 16-QAM and 64-QAM, and are therefore needed for high data rate systems.

In OFDMA-CDM systems, each subcarrier is exclusively used by a single user and therefore the system is applicable for up-and downlink. In addition no multiple-access interference between user signals occurs, but self-interference (SI) between the different data symbols is present, which belong to the one user. OFDMA-CDM symbols are transmitted over a frequency-selective mobile radio channel, where the orthogonality of the spreading codes is lost. At the receiver, an inverse OFDM operation is performed. After frequency deinterleaving, the received sequence r in the frequency domain is given by

$$r = Hs + n , \qquad\qquad (3)$$

where $\mathbf{H}=diag(H_1,H_2,...,H_L)$ is a diagonal matrix, whose complex-valued diagonal elements represent the fading on the subcarriers on which $\mathbf{s}$ has been transmitted. Additive white Gaussian noise with variance $\sigma^2/2$ per dimension is denoted by the L-dimensional vector $\mathbf{n}$.

The received vector $\mathbf{r}$ is passed to a so-called APIC block, where the algorithm is applied as described later. At the output of the APIC block, positive acknowledgement ("ACK") or negative acknowledgement ("NACK") is generated for each received packet.

The received vector $\mathbf{r}$ and matrix $\mathbf{H}$ are saved in a buffer for received values and fading values, respectively. Without loss of generality, it is assumed that P-1 vectors are already stored in each buffer. Thus, the received vector $\mathbf{r}$ and $\mathbf{H}$ represent the P-th element in the buffers. In the following, the subscript $p = 1,...,P$ is introduced, which denotes the index number of the elements in the buffers.

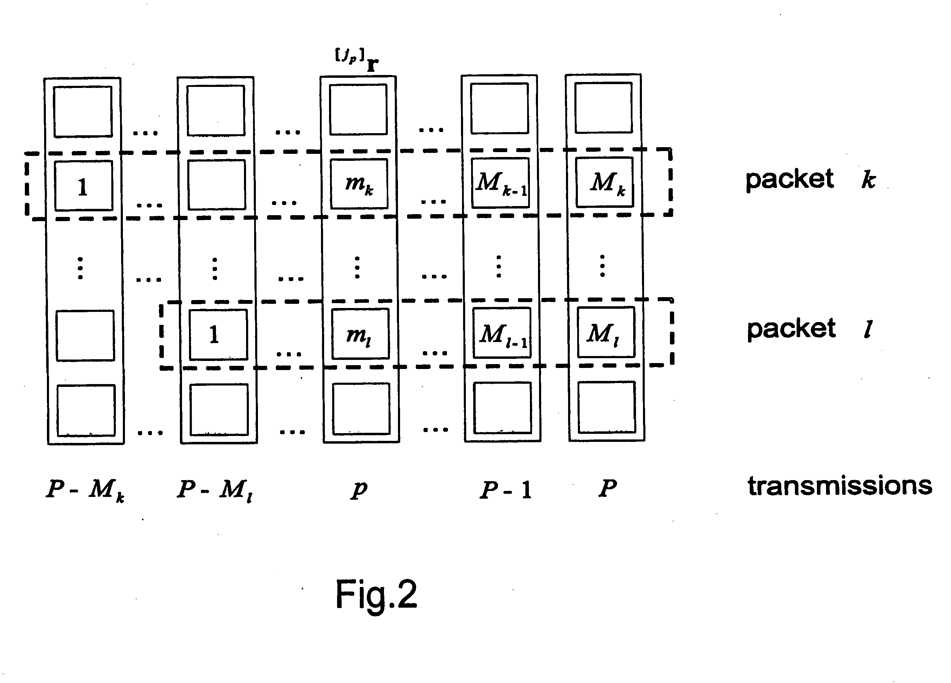

In Fig.2 the matrix-like structure demonstrates the content of the buffer of received values, where the columns denote the received vectors and the rows define the transmitted packets. The proposed algorithm is performed in multiple iterations. In each iteration up to $L$ packets can be decoded. In the following, index $j_p, j_p=1,...L$ denotes the number of packets, whose contributions are ideally subtracted from $^{[j_p]}\mathbf{r}$. The notation $^{[j_p]}\mathbf{r}$ refers to the vector received after the $p$-th transmission from which the interference of $j_p$ other packets have been removed. For convenience, the decision status values $^{(p)}DS^{(l)} \in \{true, false\}, l=1,...,L$ and $p=1,...,P$ are introduced. The expression $^{(p)}DS^{(l)}=true, l=1,...L$ means that packet $l$ has been successfully decoded and its contribution is ideally removed from $^{[j_p]}\mathbf{r}$. The improved interference cancellation scheme is illustrated by considering the transmission $p$ in Fig.2.

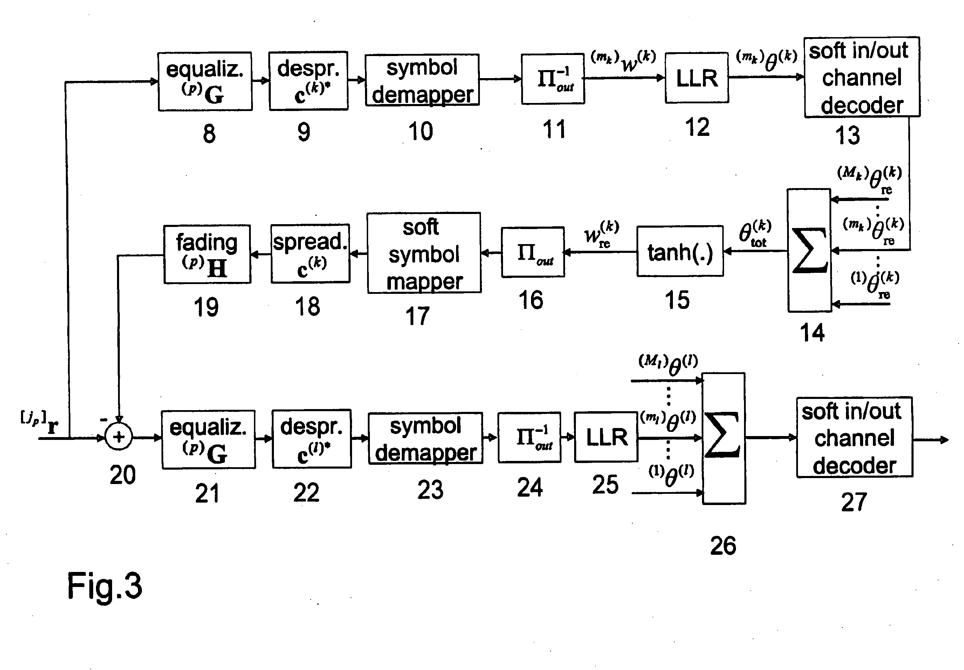

The packet $l$ will be decoded by removing the interference of packets $k=1,...,L, k \# l$. The scheme for the interference subtraction is depicted in Fig. 3. In this algorithm the data symbols of the packets $k=1,...,L, k \# l,^{(p)}DS^{(l)}=false$, are detected and decoded. Finally, the interference contribution of the $m_k$-th transmission of packet $k$ is reconstructed and subtracted from the received signal $^{[j_p]}r$. The data symbols of the $m_l$-th transmission of packet $l$ are detected in the lowest path of Fig.3.

The received signal $^{[j_p]}r$ is conducted to an equalizer 8 which is realized as a minimum-mean square error (MMSE) detector. The minimum-mean square error (MMSE) detector is used to combat the phase and amplitude distortions caused by multipath propagation on the subcarriers. The matrix of equalization coefficients of the transmission $p$ is denoted as $^{(p)}\mathbf{G}$, whose diagonal elements $^{(p)}G_i, i=1,...L,$ are given by

$$^{(p)}G_i = \frac{^{(p)}H_i^{\bullet}}{|^{(p)}H_i^{\bullet}|^2 + \sigma^2} \ . \qquad (4)$$

The equalized signal is despread in a despreading unit 9 and then given to a symbol demapper 10. Outer deinterleaving in an outer deinterleaver 11 follows after said symbol demapping. The output $\Pi_{out}^{-1}$ of the outer deinterleaver 11 delivers a soft estimate $^{(mk)}w^{(k)}$ for the transmitted code bit $b^{(k)}$ within the $m_k$-th transmission of packet $k$. The log-likelihood ratio (LLR) taken in LLR-unit 12 of the transmitted bit $b^{(k)}$ given $^{(m_k)}w^{(k)}$ is

$$^{(m_k)}\theta^{(k)} = \ln\left(\frac{P(b^{(k)}=+1|^{(m_k)}w^{(k)})}{P(b^{(k)}=-1|^{(m_k)}w^{(k)})}\right) \qquad (5)$$

and can take on values in the interval $(-\infty, +\infty)$. For OFDMA-CDM with MMSE detector the log-likelihood ratio (LLR) can be represented as

$$^{(m_k)}\theta^{(k)} \approx \frac{4}{\sigma^2 L} {}^{(m_k)}w^{(k)} \sum_{i=1}^{L} |^{(p)}H_i| \ , \qquad (6)$$

where $^{(p)}H_i, i=1,...,L$, describes the fading on the $L$ subcarriers on which bit $b^{(k)}$ has been transmitted. The log-likelihood ratio (LLR) $^{(m_k)}\theta_{re}^{(k)}$ of re-encoded bit is defined as

$$^{(m_k)}\theta_{re}^{(k)} = \ln\left(\frac{P(b^{(k)} = +1 \mid {}^{(m_k)}\mathbf{w}^{(k)})}{P(b^{(k)} = -1 \mid {}^{(m_k)}\mathbf{w}^{(k)})}\right), \qquad (7)$$

where the vector $^{(mk)}\mathbf{w}^{(k)}$ represents the sequence of all estimates within $m_k$ - *th* transmission of packet *k*. For simplicity, an index here is omitted in the notation $^{(mk)}w^{(k)}$, this index indicating a certain soft estimate within the vector $^{(mk)}\mathbf{w}^{(k)}$.

The log-likelihood ratio (LLR) $^{(m_k)}\theta_{re}^{(k)}$ which reflects the reliability of the re-encoded bit is calculated in a soft in/out channel decoder 13 taking into account all soft estimates $^{(m_k)}w^{(k)}$ of packet k. In the following, soft decided values $^{(m_k)}w^{(k)},m_k=1,...,M_k$, of the $M_k$ available transmissions of packet k are exploited in order to improve the estimate of the re-encoded values. Thus, the overall log-likelihood ratio (LLR) value is defined as

$$^{(m_k)}\theta_{tot}^{(k)} = \ln\left(\frac{P(b^{(k)} = +1 \mid {}^{(1)}\mathbf{w}^{(k)},...,{}^{(M_k)}\mathbf{w}^{(k)})}{P(b^{(k)} = -1 \mid {}^{(1)}\mathbf{w}^{(k)},...,{}^{(M_k)}\mathbf{w}^{(k)})}\right). \qquad (8)$$

The soft values $^{(m_k)}w^{(k)}$ can be assumed conditionally independent given $b^{(k)}$, since the measurement errors introduced by the multipath channel and noise are assumed independent. This assumption can be made, if random interleaving between different transmissions is applied. It is stated that value in equation (8) after further developing can be represented as

$$^{(m_k)}\theta_{tot}^{(k)} = \ln\left(\frac{P(b^{(k)} = +1 \mid {}^{(1)}\mathbf{w}^{(k)},...,{}^{(M_k)}\mathbf{w}^{(k)})}{P(b^{(k)} = -1 \mid {}^{(1)}\mathbf{w}^{(k)},...,{}^{(M_k)}\mathbf{w}^{(k)})}\right) = \sum_{u=1}^{M_k} {}^{(u)}\theta_{re}^{(k)}. \qquad (9)$$

It is assumed that both realizations of $b^{(k)}$ are equally probable and, thus

$$\ln\left(\frac{P\{b^{(k)} = +1\}}{P\{b^{(k)} = -1\}}\right) = 0. \qquad (10)$$

To transfer the log-likelihood ratio (LLR) value $\Theta_{tot}^{(k)}$ into the bit domain, the average value of $b^{(k)}$, or the so-called "soft bit", is used.

The summation performed in summing unit 14 of re-encoded values obtained in each retransmission according to equation (9) increases the absolute value of $^{(m_k)}\theta_{tot}^{(k)}$, and thus, the feedback loop uses the more reliable estimates of transmitted bits and avoids error propagation. Thus, the soft bit $w_{re}^{(k)}$ can be defined as

$$w_{re}^{(k)} = \tanh(\theta_{tot}^{(k)}/2) \qquad (11)$$

and is used in interference cancellation process.

The soft bit generated in "soft bit" unit 15 can take on values in the interval $w_{re}^{(k)} \in [-1,1]$. After re-interleaving in an outer interleaver 16, the soft bits are modulated such that the reliability information is maintained in the obtained complex-valued data symbols. The symbols obtained in soft symbol mapper 17 are spread in a spreading unit 18, weighted with the channel fading coefficients in a fading unit 19 and subtracted from the received vector $^{[i_p]}\mathbf{r}$ in a subtraction unit 20.

The summation of re-encoded values obtained in each retransmission according to (9) increases the absolute value of $\Theta_{tot}^{(k)}$, and thus, the feedback loop uses the more reliable estimates of transmitted bits and avoids error propagation. After interference cancellation of all interfering packets, the data symbols of packet $l$ are detected by applying a single-user detection technique. In contrast to equation (4), the equalizer coefficients are adopted to the quasi-SI free case and maximum ratio combining with equalization coefficients given by $^{(p)}G_i = {}^{(p)}H_i{}^*$ is used in equalizer 21.

The output of the OFDMA-CDM demodulator delivers a complex-valued vector of the symbols of packet $1$. The received symbols are despread in despreading unit 22, demapped in symbol demapper 23, and the obtained bits are deinterleaved in outer deinterleaver 24. Similar to equation (6), the reliability estimator delivers the log-likelihood ratio (LLR) values $^{(m_l)}\Theta^{(l)}$ by means of LLR-unit 25. Since in all transmissions of packet $l$, copies of the same data are sent, the obtained log-likelihood ratio (LLR) values are combined in summing unit 26 to improve the performance of H-ARQ scheme.

Soft value combining (SVC) combines several repeated packets encoded with a code rate $R$. The output of a soft value combiner delivers a value $\sum_{u=1}^{M=l} {}^{(v)}\Theta^{(l)}$ for each code bit. The values at the output of soft value combiner represent the data of packet $l$ encoded with a more powerful error-correcting code of rate $R/M_1$. These data are taken at the output of soft in/out channel decoder 27.

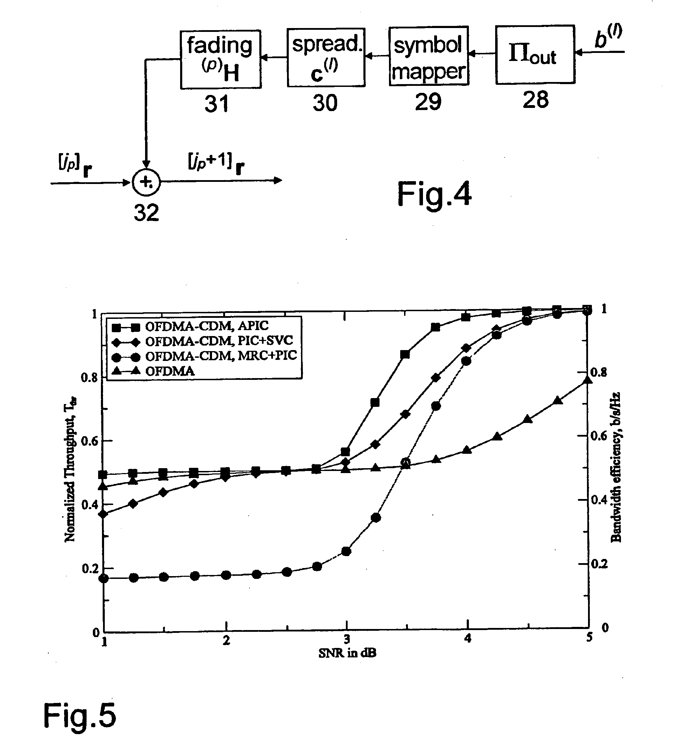

Assume that the cyclic redundancy check (CRC) verifies an error-free transmission of packet $l$. In this case, the soft bit is equal to $w_{re}^{(l)} = 1$ if $b^{(l)} = 1$ is transmitted or $w_{re}^{(l)} = -1$ otherwise. Fig.4 illustrates the obtained simplified interference cancellation scheme, i.e. ideal interference reconstruction and subtraction. The soft bits $w_{re}^{(k)}$ or equivalently the correctly decided code bits $b^{(l)}$ within packet $l$ are interleaved in outer interleaver 28 and at the output of symbol mapper 29 the complex-valued data symbols are obtained. The data symbols are spread in spreading unit 30 and the obtained chips are weighted with the appropriate channel fading coefficients in fading unit 31. Then, the reconstructed interference is subtracted from the received vector $^{[i_p]}\mathbf{r}$ in subtraction unit 32. Finally, the obtained vector $^{[i_p+1]}\mathbf{r}$ updates the value $^{[i_p]}\mathbf{r}$ in the buffer of the received values.

The proposed APIC block algorithm is summarized in the following table. As shown in said table this algorithm is carried out in multiple iterations. A single iteration can be described by steps (1)-(5). Up to $L$ packets can be decoded in one iteration. If any packet has been decoded in the iteration, the next iteration starts from step (1), since ideal interference removal can improve the decoding probability of undecoded packets.

Table

```
Input:
[jp]r,p = 1,...,P        :        received vectors
(p)H,p = 1,...,P         :        fading coefficients
(p)DS(l),p = 1,...,P,
l = 1,...,L              :        decision statuses
L                        :        number of packets
M1,...,ML                :        occurred transmissions


1: for l = 1,...,L{
2: for p = P - M1,...,P{
            for k = 1,...,L{
                if (k ≠ l AND (p)DS(l) = false){
                        Perform interference subtraction
                        of packet k in transmission [j,l]r
                        as shown in Fig.3.
                }
            }
        }
        After step (2), Ml soft values,
        (ml)Θ(l),ml = 1,...,Ml,
        are obtained for each code bit.
3: Combine the soft values as ∑u=1^Ml (u)Θ(l)
    and perform soft decoding.
4: if (CRC check of packet l is OK){
                Ideally remove the interference of packet l
                from the transmissions [j,l]r,p = P - M1,...,P
                as shown in Fig.4.
                jp:=jp + 1
                (p)DS(l):=true
        }
    }
5: for p = 1,...,P{
        if (jp = L){
        Remove values [L]r and (p)H from the
        buffers of received and fading values, respectively
            }
        }
6: if (any packet has been decoded in steps (1)-(5) {
        go to 1
        }
else end of algorithm
```

If no additional packets can be decoded in the iteration, the algorithm stops and notifies the transmitter about the current decoding status of each transmitted packet. If the packet can not be decoded, a negative acknowledgement "NACK" is generated, otherwise a positive acknowledgement "ACK" is generated.

If index $j_p$, $p = 1,...,P$, reaches the maximum value $L$, all packets are decoded in $[L]r$. Thus, $[L]r$ contains no more useful information (step (5)). The vector $^{[L]}\mathbf{r}$ and the corresponding matrix $^{(p)}\mathbf{H}$ are removed from the buffer of the received values and from the buffer of the fading values, respectively.

A preferred embodiment of an OFDMA-CDM transmission system and simulation results thereof will be described hereinafter.

The transmission system under investigation has a bandwidth of $BW$ = 50 MHz and the carrier frequency is located at 5 GHz. The total number of subcarriers is $N_c$=1024. The resulting subcarrier spacing is 48.82 kHz and the OFDMA-CDM symbol duration is 20.4 $\mu$s. The modulation is either QPSK, 16-QAM or 64-QAM. The number of simultaneously active users is 8. Walsh-Hadamard codes of length $L$ = 8 are applied, which is a good compromise between complexity and performance. A convolutional channel encoder with code rate $R$ = 1/2 and memory $m_e$ = 6 is used for the simulations. In the following, Rayleigh fading is assumed to be independent between adjacent subcarriers and OFDMA-CDM symbols. The performance of a conventional OFDMA system with comparable parameter setting as for OFDMA-CDM is used as a reference. For OFDMA, maximum ratio combining (MRC) equalization is employed together with H-ARQ based on soft values combining (SVC).

As another performance reference, an OFDMA-CDM system is used where several subsequent OFDMA-CDM symbols are employed for the transmission of data symbols of one packet. In this case, all spreading codes are assigned for the transmission of one packet. This allocation allows to exploit H-ARQ based on MRC, since in each retransmission the same data symbols are transmitted. As data detection and decoding technique, soft parallel interference cancellation (soft PIC) is applied. Since all simulations are performed in an independent Rayleigh fading channel, the assumption of ideal chip interleaving across the transmission frame can be made for this system.

For all considered systems, transmitted packets have the same size of 2042, 4090 and 3066 bits for QPSK, 16-QAM and 64-QAM, respectively. The number of OFDMA-CDM symbols in the frame $N_{fr}$ is equal to 128 for QPSK and 16-QAM, and 64 for 64-QAM. The maximum achievable data rates depend on the symbol mapping alphabet and are equal to 6.25 Mb/s/user for QPSK, 12.5 Mb/s/user for 16-QAM and 18.78 Mb/s/user for 64-QAM.

The system performance is evaluated as a function of normalized throughput $T_{thr}$ versus signal-to-noise ratio SNR. The normalized throughput is defined as the reciprocal value of the average number of transmissions needed to successfully decode the transmitted packet. Another figure of merit is the spectral efficiency. The spectral efficiency is proportional to the normalized throughput and can be defined as the ratio of the instantaneous data rate to the available bandwidth. The signal-to-noise ratio SNR corresponding to normalized throughput $T_{thr}$ = 0.95 is referred as the working point in the following. It is assumed $N_{tr}$=10 in the simulations.

A guard interval greater than the maximum channel delay is added at the beginning of each OFDMA-CDM symbol. The receiver has perfect channel state information and is perfectly synchronized.

The here proposed algorithm will be referred as advanced parallel interference cancellation scheme (APIC) in the following. For the reference see the table shown previously in this description.

In Fig. 5 the normalized throughput $T_{thr}$ as a function of the signal-to-noise ratio SNR is depicted. The modulation alphabet is QPSK. One can see that OFDMA-CDM system with APIC performs better than any other technique. At the working point of OFDMA-CDM with APIC, the gain in throughput $T_{thr}$ and bandwidth efficiency b/s/Hz is 17.2 % compared to OFDMA-CDM with PIC and H-ARQ based on SVC. The bandwidth efficiency gap between OFDMA-CDM with APIC and OFDMA is around 45.2 %. The OFDMA-CDM with H-ARQ based on MRC performs 27.1 % worse than OFDMA-CDM with APIC. At lower SNR, the performance of APIC is comparable with MRC and SVC. Because of the spreading, and thus, frequency diversity, the OFDMA-CDM system outperforms OFDMA at high SNR. At SNR values lower than 3 dB, the soft PIC can not cope with self-interference (SI) and OFDMA-CDM performs the same as conventional OFDMA. The combination of PIC and SVC performs better than a combination of MRC and soft PIC for OFDMA-CDM. This effect can be explained as follows. In H-ARQ based on MRC, the signal-to-noise ratio SNR is enhanced in every retransmission, whereas H-ARQ based on SVC exploits a stronger code, and thus, the quality of soft PIC cancellation can be improved.

Superimposed packet allocation for OFDMA-CDMA transmission has been proposed by the present invention. An iterative APIC algorithm, which is a combination between H-ARQ based on SVC and PIC has been presented by the present invention. The simulation results show that the proposed system and its algorithm outperform an OFDMA system with H-ARQ based on SVC, an OFDMA-CDM system with PIC and H-ARQ based on SVC, and an OFDMA-CDM system with H-ARQ based on MRC and PIC. The reason for this is that OFDMA-CDM with APIC successfully exploits the frequency diversity provided by the CDM component and at the same time combats self-interference (SI) more efficiently. The ideal interference cancellation scheme allows the receiver to remove the interference at high signal-to-noise ratio (SNR), where the packet error rate does not exceed 5 %. The advantages of re-encoded values combining appear especially at lower signal-to-noise ratio (SNR), where the number of retransmission is large.

List of references

1 channel encoder
2 outer interleaver
3 symbol mapper
4 spreading unit
5 summing unit
6 inner interleaver
7 OFDM-modulator
8 equalizer
9 despreading unit
10 symbol demapper
11 outer deinterleaver
12 LLR-unit
13 soft in/out channel decoder
14 summing unit
15 "soft bit" unit
16 outer interleaver
17 soft symbol mapper
18 spreading unit
19 fading unit
20 subtraction unit
21 equalizer
22 despreading unit
23 symbol demapper
24 outer deinterleaver
25 LLR-unit
26 summing unit
27 soft in/out channel decoder
28 outer interleaver
29 symbol mapper
30 spreading unit
31 fading unit
32 subtraction unit

## Claims

1. Multi-user OFDMA-CDM multiple access communication method for transmitting signals prepared as digital OFDMA-CDM data symbols in the form of packets between a transmitter and a receiver, and using soft interference cancellation including a soft in/out channel decoder (13), comprising

- applying superimposed packet allocation where L packets are transmitted within one frame and for each of the superimposed packets a H-ARQ process is implemented,
- using an iterative algorithm in the receiver which is a combination of soft in/out channel decoding (13), soft interference cancellation (8-19) and H-ARQ based on soft value combining and exploiting reliability information of erroneously received copies of the same data packet by combining several repeated packets (14) and delivering a value for each code bit, the values at the output of said soft combining (14) representing the data of the respective packet,
- determining the correctly received packets using cycle redundancy checking, and
- reconstructing the interference caused by correctly received packets ideally (28, 29, 30, 31) and subtracting said ideally reconstructed interference from a received signal vector (r) (32),

**characterized in that** the method further comprises at the transmitter, using

- different orthogonal subcarriers (OFDMA) for each of the different users and an additional code division multiplexing (CDM) component by which the packets of a certain user are spread (4) with orthogonal spreading codes and transmitting (7) obtained chips on separate subcarriers, and
- at the receiver, for soft interference cancellation, combining (14) soft-output values of the soft in/out channel decoders (13) of repeated packets and performing the soft-interference cancellation based on these combined soft-output values, whereby the soft-output values are log-likelihood ratios (LLR).

2. Method according to claim 1, **characterized by** applying a Walsh-Hadamard transformation or similar code to perform spreading (4), this transformation allowing one orthogonal Walsh-Hadamard spreading code or one similar code, respectively, to be associated with each transmitted packet, according to parallel units (1, 2, 3, 4) and by transmitting the resulting sequence within one OFDMA-CDM symbol (7).

3. Method according to claim 1 or 2, **characterized by** transmitting L (1 = 1, ..., L) packets of equal size simultaneously from an OFDMA-CDM transmitter by applying spreading codes (4) of length L within the CDM component, by appending cyclic redundancy check (CRC) bits at the end of each packet, by decoding the packet at the receiver and considering it error-free, if the cyclic redundancy check passes, whereby in this case, a positive acknowledgment (ACK) is generated and sent back to the transmitter and otherwise, a negative acknowledgement (NACK) is sent back and the transmission of the erroneously decoded packet is repeated.

4. Method according to claim 3, **characterized in that** the maximum allowed of the transmissions is limited to $N_{tr}$ and, if the packet cannot be decoded in $N_{tr}$ transmissions, the transmitter discards the packet.

5. Method according to claim 3 or 4, **characterized by** transmitting the L packets (1, 2, 3, 4) at the physical layer simultaneously within one frame (7), which consists of $N_{fr}$ OFDMA-CDM symbols.

6. Method according to claim 3, **characterized in that** data symbols from different packets are transmitted in groups of $L$ symbols (1, 2, 3, 4) and only one data symbol from each packet is transmitted in each group, and thus, denoting the number of groups transmitted within one OFDM-CDM symbol as $Q$, $Q$ symbols of each packet are transmitted within one OFDM-CDM symbol, using $LQ$ subcarriers.

**Patentansprüche**

1. Multi-User-OFDMA-CDM-Mehrfachzugriffs-Kommunikationsverfahren, um Signale, die als digitale OFDMA-CDM-Datensymbole in Form von Paketen aufbereitet sind, zwischen einem Sender und einem Empfänger zu übertragen, und um eine Soft-Interferenzlöschung mit einem Eingangs-/Ausgangs-Kanal-Dekodierer (13) zu verwenden, mit

- Anwendung einer Zuweisung überlagerter Pakete, bei der L Pakete innerhalb eines Rahmens übertragen werden und für jedes der überlagerten Pakete ein H-ARQ-Prozess implementiert wird,
- in dem Empfänger, Verwendung eines iterativen Algorithmus, der eine Kombination von Soft-Eingangs-/Ausgangs-Kanal-Dekodierung (13), Soft-Interferenz-Löschung (8-19) und H-ARQ ist und der auf Soft-Wert-Kombinier- und Nutzungs-Zuverlässigkeits-Information fehlerhaft empfangener Kopien des gleichen Datenpakets basiert, und zwar durch Kombinieren mehrerer wiederholter Pakete (14) und Ausgeben eines Werts für jedes Code-Bit, wobei die Werte am Ausgang des Soft-Kombinierens (14) die Daten des jeweiligen Pakets repräsentieren,
- Bestimmen der korrekt empfangenen Pakete mittels zyklischer Redundanzprüfung, und
- idealgemäßes Rekonstruieren (28, 29, 30, 31) der durch korrekt empfangene Pakete bewirkten Interferenz und Subtrahieren dieser idealgemäß rekonstruierten Interferenz von einem empfangenen Signal-Vektor (r) (32),

**dadurch gekennzeichnet, dass** das Verfahren ferner umfasst:

- am Sender, Verwenden verschiedener orthogonaler Subcarrier (OFDMA) für jeden der verschiedenen Benutzer und einer zusätzlichen Code-Division-Multiplexing- (CDM-) Komponente, mittels derer die Pakete eines bestimmten Benutzers mit orthogonalen Spreizungscodes gespreizt werden (4), und Übertragen (7) erhaltener Chips auf separaten Subcarriern, und
- am Empfänger, zwecks Software-Löschung, Kombinieren (14) von Soft-Ausgangswerten der Soft-Eingangs-/Ausgangs-Kanal-Dekodierer (13) wiederholter Pakete und Durchführen der Soft-Interferenz-Löschung auf der Basis dieser kombinierten Soft-Ausgangswerte, wodurch die Soft-Ausgangswerte Log-Likelihood-Verhältnisse (LLR) sind.

2. Verfahren nach Anspruch 1, **gekennzeichnet durch** Anwenden einer Walsh-Hadamard-Transformation oder eines ähnlichen Codes zum Durchführen der Spreizung (4), wobei diese Transformation ermöglicht, dass jedem übertragenen Paket ein orthogonaler Walsh-Hadamard-Spreiz-Code bzw. ein ähnlicher Code entsprechend paralleler Einheiten (1, 2, 3, 4) zugeordnet wird, und **durch** Übertragen der resultierenden Sequenz innerhalb eines OFDMA-CDM-Symbols (7).

3. Verfahren nach Anspruch 1 oder 2, **gekennzeichnet durch** gleichzeitiges Übertragen von $L(l=1, ..., L)$ Paketen gleicher Größe von einem OFDMA-CDM-Sender **durch** Anwenden von Spreiz-Codes (4) der Länge L innerhalb der CDM-Komponente, **durch** Anfügen zyklischer Redundanz-Prüf- (CRC-) Bits am Ende jedes Pakets, **durch** Dekodieren des Pakets am Empfänger und Betrachten des Pakets als fehlerfrei, falls es die zyklische Redundanz-Prüfung besteht, wobei in diesem Fall eine positive Bestätigung (ACK) erzeugt und an den Sender zurückgesandt wird, und andernfalls eine negative Bestätigung (NACK) zurückgesandt wird und die Übertragung des fehlerhaft dekodierten Pakets wiederholt wird.

4. Verfahren nach Anspruch 3, **dadurch gekennzeichnet, dass** die maximal zulässige Anzahl von Übertragungen auf $N_{tr}$ beschränkt ist und, falls das Paket in $N_{tr}$ Übertragungen nicht dekodiert werden kann, der Sender das Paket verwirft.

5. Verfahren nach Anspruch 3 oder 4, **gekennzeichnet durch** gleichzeitiges Übertragen der $L$ Pakete (1, 2, 3, 4) an der Physical Layer innerhalb eines Rahmens (7), der aus $N_{tr}$ OFDMA-CDM-Symbolen besteht.

6. Verfahren nach Anspruch 3, **dadurch gekennzeichnet, dass** DatenSymbole von verschiedenen Paketen in Gruppen von $L$ Symbolen (1, 2, 3, 4) übertragen werden und in jeder Gruppe nur ein Daten-Symbol aus jedem Paket übertragen wird und somit, wenn Q die Anzahl von Gruppen bezeichnet, die innerhalb eines OFDM-CDM-Symbols übertragen werden, innerhalb eines OFDM-CDM-Symbols Q Symbole jedes Pakets unter Verwendung von $LQ$ Subcarriern übertragen werden.

**Revendications**

1. Procédé de communication à accès multiple OFDMA-CDM multi-utilisateurs pour la transmission, entre un émetteur et un récepteur, de signaux préparés sous la forme de symboles de données numériques OFDMA-CDM mis en paquets, et à l'aide d'une annulation d'interférence douce, incluant un décodeur de canal entrant/sortant doux (13), comprenant les étapes consistant à :

- appliquer une allocation de paquets superposés, dans laquelle $L$ paquets sont transmis dans une seule trame et, pour chacun des paquets superposés, un processus H-ARQ est mis en oeuvre,
- utiliser, dans le récepteur, un algorithme itératif qui est une combinaison d'un décodage de canal entrant/sortant doux (13), d'une annulation d'interférence douce (8-19) et d'une technique H-ARQ basée sur une combinaison de valeur douce, et qui exploite des informations de fiabilité concernant des copies du même paquet de données reçues avec des erreurs, en combinant plusieurs paquets répétés (14) et en délivrant une valeur pour chaque bit de code, les valeurs à la sortie de ladite combinaison douce (14) représentant les données du paquet concerné,
- déterminer les paquets reçus correctement à l'aide d'un contrôle par redondance cyclique, et
- reconstruire de manière idéale l'interférence provoquée par les paquets reçus correctement (28, 29, 30, 31) et soustraire ladite interférence reconstruite de manière idéale d'un vecteur de signal reçu (r) (32),

**caractérisé en ce que** le procédé comprend en outre les étapes consistant :

- au niveau de l'émetteur, à utiliser $L$ différentes sous-porteuses orthogonales (OFDMA) pour chacun des différents utilisateurs et une composante de multiplexage par répartition de code (CDM) additionnelle, au moyen de quoi les paquets d'un certain utilisateur sont étalés (4) avec des codes d'étalement orthogonaux, et transmettre (7) les éléments obtenus sur des sous-porteuses distinctes, et
- au niveau du récepteur, pour une annulation d'interférence douce, à combiner (14) les valeurs de sortie douces des décodeurs de canal entrant/sortant doux (13) de paquets répétés, et exécuter l'annulation d'interférence douce en fonction de ces valeurs de sortie douces combinées, de sorte que les valeurs de sortie douces sont des logarithmes de rapports de vraisemblance (LLR).

2. Procédé selon la revendication 1, **caractérisé par** l'application d'une transformation de Walsh-Hadamard ou d'un code similaire pour exécuter un étalement (4), cette transformation permettant l'association d'un code d'étalement de Walsh-Hadamard orthogonal, ou respectivement d'un code similaire, à chaque paquet transmis, selon des unités parallèles (1, 2, 3, 4) et par transmission de la séquence obtenue dans un seul symbole OFDMA-CDM (7).

3. Procédé selon la revendication 1 ou 2, **caractérisé par** la transmission simultanée de $L$ ($l$= 1, ..., $L$) paquets de taille égale, depuis un émetteur OFDMA-CDM, par application de codes d'étalement (4) de longueur $L$ dans la composante CDM, par ajout de bits de contrôle par redondance cyclique (CRC) à la fin de chaque paquet, par décodage du paquet au niveau du récepteur et considération de celui-ci comme étant exempt d'erreur, si le contrôle par redondance cyclique est réussi, de sorte que, dans ce cas, un accusé réception (ACK) est généré et renvoyé à l'émetteur et qu'autrement, un accusé réception négatif (NACK) est renvoyé et la transmission du paquet décodé avec des erreurs est répétée.

4. Procédé selon la revendication 3, **caractérisé en ce que** le nombre maximum de transmissions autorisé est limité à $N_{tr}$ et, si le paquet ne peut pas être décodé en $N_{tr}$ transmissions, l'émetteur jette le paquet.

5. Procédé selon la revendication 3 ou 4, **caractérisé par** la transmission simultanée des $L$ paquets (1, 2, 3, 4) au niveau de la couche physique, dans une seule trame (7), qui consiste en $N_{fr}$ symboles OFDMA-CDM.

6. Procédé selon la revendication 3, **caractérisé en ce que** des symboles de données provenant de paquets différents sont transmis dans des groupes de $L$ symboles (1, 2, 3, 4) et un seul symbole de données de chaque paquet est transmis dans chaque groupe, de sorte que, si l'on désigne par Q le nombre de groupes transmis dans un seul symbole OFDM-CDM, Q symboles de chaque paquet sont transmis dans un seul symbole OFDM-CDM, à l'aide de $LQ$ sous-porteuses.

Fig.1

Fig.2

Fig.3

Fig.4

Fig.5

**EP 1 724 959 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. KAISER.** OFDM Code Division Multiplexing with Unequal Error Protection and Flexible Data Rate Adaptation. *IEEE Globecom' 01, 2001 IEEE Global Telecommunications Conference,* 25 November 2001, vol. 2-6, 861-865
- **S. KAISER.** OFDM-code-division multiplexing in fading channels. *IEEE Trans. on Commun.,* August 2002, vol. 50 (8), 1266-1273
- **J. HAGENAUER.** Rate compatible punctured convolutional codes (RCPC) and their application. *IEEE Trans. Comm.,* April 1998, vol. 36, 389-400
- **D. CHASE.** Code combining - a maximum-likelihood decoding approach for combining an arbitrary number of noisy packets. *IEEE Trans. on Commun.,* May 1985, (5), 385-393

- **J. HAGENAUER.** Forward error correcting for CDMA systems. *Proc. IEEE Fourth Int. Symp. Spread Spectrum Tech. Applicat,* September 1996, 566-569
- **X. WANG ; H. V. POOR.** Iterative (turbo) soft interference cancellation and decoding for coded CDMA. *IEEE Trans . on Commun.,* July 1999, vol. 47 (7), 1046-1061
- **HAITAO ZHENG et al.** Multiple ARQ processes for MIMO systems. *Personal, Indoor and Mobile Radio Communications, 2002, The 13th IEEE International Symposium,* 15 September 2002, vol. 3, 1023-1026